# EUROPÄISCHE PATENTANMELDUNG

(11) **EP 0 717 526 A2**
(43) Veröffentlichungstag der Anmeldung: **19.06.1996**
(21) Anmeldenummer: 95119030.5
(22) Anmeldetag: 04.12.1995
(51) Int. Cl.: H04L 5/14

(54) **Fernmeldeanschlussnetz zur Übertragung von Fernmeldeinformationen zwischen teilnehmernahen Leitungsanschlusseinheiten und teilnehmerindividuellen Netzabschlusseinheiten**

(30) Priorität: 13.12.1994 DE 4444312
(71) Anmelder: SIEMENS AKTIENGESELLSCHAFT, D-80333 München (DE)
(72) Erfinder: Prey, Gerhard, Ing., D-82223 Eichenau (DE)

(57) **Zusammenfassung**

Zwischen teilnehmernahen Leitungsanschlußeinheiten (LT) und teilnehmerindividuellen Netzabschlußeinheiten (NT) werden auf zwei Paaren (a0,b0·a1,b1) von Kupferleitungsadern nach dem HDB3-Verfahren oder dem HDSL-Verfahren 2,048 MBit/s-Informationen übertragen. Außerdem ist mit den Leitungsaderpaaren ein Phantomkreis gebildet, an den teilnehmerseitig die a, b-Adern aT/bT der Endgerätezuleitung und vermittlungsseitig die a, b-Adern (aZ/bZ) der Teilnehmeranschlußleitung für die Übertragung von 64 kBit/s-Informationen angeschlossen sind.

## Beschreibung

Die Erfindung betrifft ein Fernmeldeanschlußnetz zur Übertragung von Fernmeldeinformationen zwischen teilnehmernahen Leitungsanschlußeinheiten und teilnehmerindividuellen Netzabschlußeinheiten.

Die Entwicklung von Fernsprechnetzen geht immer mehr in Richtung eines Universalnetzes, in dem neben der Übertragung von reinen Fernsprechinformationen in der bisherigen Übertragungsqualität höherwertige Dienste geboten werden, zu denen neben der Sprachübertragung in verbesserter Qualität die Übertragung von Informationen anderer Fernmeldedienste gehören.

Wegen der enormen Investitionen, die in dem existierenden Fernsprechnetz liegen, kann bei der Einführung neuer Dienste nur so vorgegangen werden, daß insbesondere im dezentralen, also teilnehmernahen Bereich auf existierende Einrichtungen und Leitungen zurückgegriffen wird.

Beim sogenannten ISDN (Integrated Services Digital Network) wird mit einem Basisanschluß über die normalen Teilnehmeranschlußleitungen neben zwei Basiskanälen von jeweils 64 kBit/sec Übertragungsbitrate für Sprachübertragung noch ein Kanal von 16 kBit/sec Übertragungsbitrate für die Übertragung anderweitiger Daten zur Verfügung gestellt.

Für Dienste, die eine höhere Übertragungsbitrate erfordern, wie beispielsweise Bildfernsprechen in zufriedenstellender Bildqualität, ist ein solcher Basisanschluß allerdings nicht besonders gut geeignet, da bei der zugrundeliegenden Übertragungstechnik die erforderlichen höherratigen Signale eine zu starke Dämpfung erfahren würden.

Die Aufgabe der Erfindung besteht daher darin, ein Fernmeldeanschlußnetz anzugeben, das unter Beibehaltung der kostenintensiven Netzteile neben dem Fernmeldedienst Fernsprechen die Installierung höherwertiger Fernmeldedienste erlaubt, deren Übertragungsbitrate weit über den Möglichkeiten des erwähnten ISDN-Basisanschlusses liegen.

Diese Aufgabe wird durch die im Patentanspruch 1 angegebenen Merkmale gelöst.

Die Erfindung geht davon aus, daß ein sehr großer Teil sowohl der Arbeits- als auch der Materialinvestitionskosten des heutigen Fernsprechnetzes in den Leitungsverbindungen zwischen teilnehmernahen Leitungsanschlußeinheiten in der Form von Anschlußkästen bzw. Kabelverzweigern oder von aus der Vermittlungsstelle ausgelagerten digitalen Leitungseinheiten mit Konzentratorfunktion und teilnehmerindividuellen Netzabschlußeinheiten liegt, wobei es sich bei diesen Leitungsverbindungen um Kupferleitungsadernpaare handelt, von denen in vielen Fällen bisher nur ein Leitungsadernpaar ausgenutzt ist.
Die Erfindung greift auf schon existierende Übertragungstechniken zurück, mit deren Hilfe Informationen mit einer Übertragungsbitrate, die wesentlich höher ist als die für Fernsprechen benötigte Übertragungsbitrate, über Entfernungen übertragen werden können, die in der Größenordnung der Leitungslängen zwischen den erwähnten Leitungsanschlußeinheiten und den teilnehmerindividuellen Netzabschlußeinheiten liegen.

Es ist hier das sogenannten HDB3-Verfahren zu erwähnten, das Gebrauch von einer Vierdrahtleitung mit einem Kupferleitungsadernpaar für die eine Übertragungsrichtung und einem zweiten Kupferleitungsadernpaar für die andere Übertragungsrichtung Gebrauch macht. Mit diesem Verfahren sind bei einer Bitrate von 2,048 MBit/sec Entfernungen von ca. 1 km überbrückbar. Es ist hier ferner das sogenannte HDSL-Verfahren zu erwähnen, bei dem beide Kupferleitungsadernpaare sowohl für die Hin- als auch für die Rückrichtung ausgenutzt werden, wozu eine Echokompensation erforderlich ist, und bei dem der Informationsstrom in bestimmter Weise hälftig auf die beiden Leitungsadernpaare verteilt ist. Mit diesem Verfahren lassen sich bei der angegebenen Bitrate ca. 3 km überbrücken.

Die genannten Verfahren kommen bisher zur Informationsübertragung innerhalb von Fernsprechvermittlungsstellen bzw. zur Informationsübertragung zwischen Fernsprechvermittlungsstelle und vermittlungsnahen Übertragungseinheiten zur Anwendung.

Da beide der genannten Verfahren schon genormt sind, liegt bei dem erfindungsgemäßen Vorschlag, eine solche Übertragungstechnik auf den Leitungen zwischen Leitungsanschlußeinheiten und teilnehmerindividueller Netzanschlußeinheit einzusetzen, die weitere Überlegung zugrunde, daß diese genormte Technik für die über den eigentlichen Fernsprechverkehr hinausgehenden Dienste unverändert beibehalten werden sollte, um solche Dienste nützende Einrichtungen unverändert einsetzen zu können und nicht diese Techniken durch weiteren Investitionsaufwand oder durch Inkaufnahme verringerter Reichweite um den Bitratenbedarf des Fernsprechens in der Größenordnung von 256 kBit/sec zu erweitern.

In den Unteransprüchen sind vorteilhafte Realisierungen des erfindungsgemäßen Fernsprechanschlußnetzes angegeben

Nachstehend wird die Erfindung anhand eines Ausführungsbeispiels unter Bezugnahme auf eine Zeichnung näher erläutert.

In der Zeichnung zeigen:
Figur 1 eine Anordnung zur Veranschaulichung des erfindungsgemäß zur Übertragung von Informationen höherer Bitrate in Frage kommenden HDB3-Verfahrens,
Figur 2 eine entsprechende Anordnung für das alternativ zur Anwendung in Frage kommende HDSL-Verfahren,
Figur 3 und 4 zwei Varianten von Netzstrukturen, bei denen die Erfindung zum Einsatz gebracht worden ist,
Figur 5 und 6 die erfindungsgemäße Ausgestaltung der teilnehmernahen Leitungsanschlußeinheiten und teilnehmerindividuellen Netzabschlußeinheiten im Hinblick auf die Zusammenführung der Fernsprechdaten und der mit demgegenüber höherer Bitrate zu übertragenden Daten.

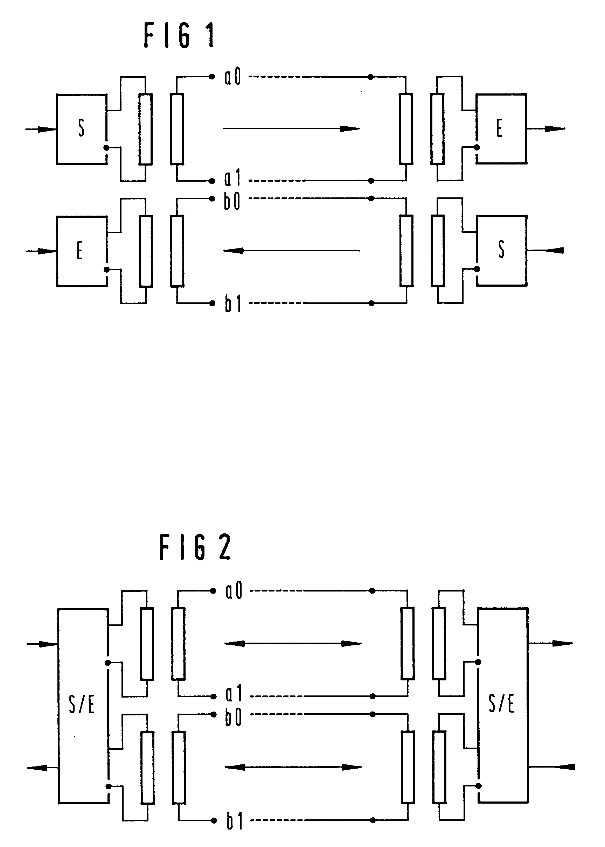

Beim HDB3-Verfahren erfolgt die Informationsübertragung zwischen Sendeeinrichtungen S und Empfangseinrichtungen E, wie Figur 1 zeigt, für Hin- und Rückrichtung über getrennte Leitungsadernpaare a0, a1 bzw. b0, b1.

Der HDB3-Code, der bei diesem Verfahren für die Digitalsignalübertragung verwendet wird, ist ein pseudoternärer Code, bei dem die "1"-Werte eines Binärcodes abwechselnd durch Impulse mit positiver und negativer Spannung wiedergegeben werden, wogegen die Binärwerte "0" durch die Spannung Null repräsentiert werden und bei dem dafür gesorgt ist, daß, keine längeren "0"-Folgen auftreten können, da diese eine Taktrückgewinnung aus den Wechseln zwischen positiven und negativen Spannungswerten erschweren könnten.Mit dem HDB3-Verfahren lassen sich ohne Einsatz von Zwischenregeneratoren bei einer Übertragungsbitrate von 2,048 MBit/sec Reichweiten von ca. 1 km erreichen.

Beim HDSL-Verfahren (HIGH Bit-Rate Digital Subscriber Line), wie es anhand der Figur 2 veranschaulicht wird, sind für die Übertragung von digitalen Informationen ebenfalls zwei Leitungsadernpaare vorgesehen, wobei jedoch auf jeden Leitungsadernpaar Signale der Hin- und Rückrichtung im Gleichlageverfahren übertragen werden. In den Empfangseinrichtungen der Sende-Empfangseinheiten SE muß daher eine Echokompensation vorgenommen werden.

Der Datenstrom ist beim HDSL-Verfahren in bestimmter Weise hälftig auf die beiden Leitungsadernpaare verteilt. Mit diesem Verfahren lassen sich bei der Übertragung von 2 MBit/sec Signalen, wie erwähnt, Leitungslängen von ca. 3km überbrücken. Die gegenüber dem HDB3-Verfahren größere Reichweite des HDSL-Verfahrens kommt zum einen durch die erwähnte Verteilung des Datenstroms auf zwei Leitungsadernpaare zustande, wobei so vorgegangen wird, daß aufeinanderfolgende Bits eines Datenwortes abwechselnd über das eine und das andere Leitungsadernpaar übertragen werden und zum andern dadurch, daß jeweils zwei Bit zur Bildung eines quaternären Codes herangezogen werden, so daß sich die Schrittweite der übertragenen Signale, durch die der Grad der Bedämpfung auf der Übertragungsleitung bestimmt wird, insgesamt um den Faktor 4 reduziert, wogegen beim HDB3-Verfahren die Schrittweite der Übertragungsbitrate, also 2 MBit/sec gleicht.

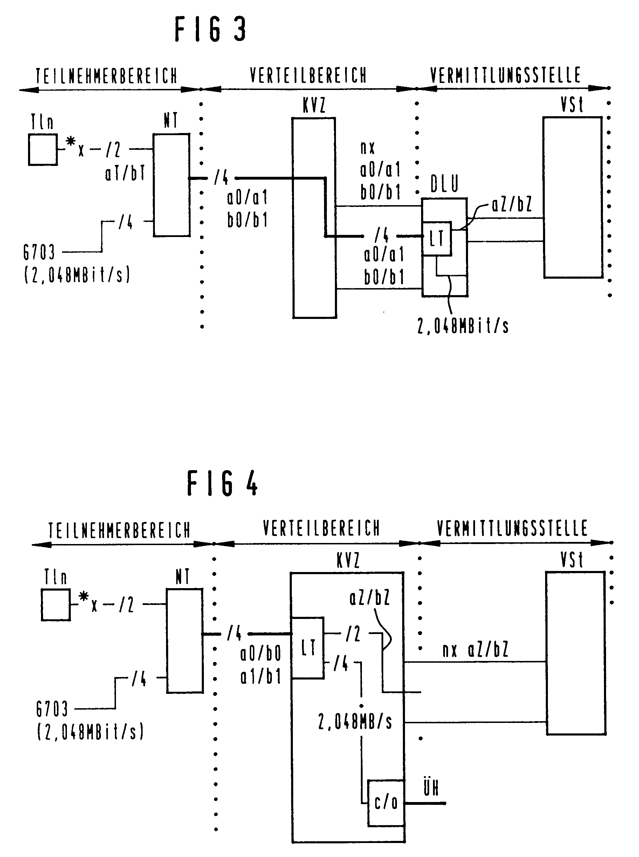

Bei der Netzstruktur gemäß Figur 3 verlaufen zwischen der von der Vermittlungsstelle VSt abgesetzten Leitungsanschlußeinheit LT einer digitalen Leitungseinheit DLU, die zwar funktionell noch zur Vermittlungsstelle zu rechnen ist, jedoch teilnehmernah in einem Abstand von weniger als 3 km angeordnet ist, und einen Kabelverzweiger KVZ, der im Nahbereich von Gebäuden angeordnet ist, ein Bündel von Leitungsadernpaaren. Eines dieser Leitungsadernpaare ist vom Kabelverzweiger KVZ zu der dargestellten Netzanschlußeinheit NT weitergeführt, die dem dargestellten Teilnehmeranschluß mit einem Teilnehmerapparat Tlna und einer Schnittstelle G703 für Daten mit einer höheren Übertragungsrate, beispielsweise 2,048 MBit/s individuell zugeordnet ist.

Auf einem solchen zwischen der Leitungsanschlußeinheit LT der digitalen Leitungseinheit DLU und der Netzanschlußeinheit NT verlaufenden Leitungsadernpaar werden sowohl Fernsprechinformationen, die für den Teilnehmerapparat TlnA bestimmt sind bzw. von diesem stammen, als auch die 2 MBit/sec-Daten von und zur Schnittstelle G703 übertragen, wobei das Multiplexen bzw. Demultiplexen dieser Daten in den Einheiten NT und LT erfolgt, worauf weiter unten noch eingegangen wird.

Schon bisher existierten zwischen den Einheiten LT und NT jeweils zwei Paare von Kupferleitungsadern, so daß das zusätzliche Heranführen von 2 MBit/sec-Informationen keinen zusätzlichen Leitungsaufwand erfordert.

Bei der Netzstruktur gemäß Figur 4 verläuft zwischen der Vermittlungsstelle VSt und dem Kabelverzweiger KVZ ein Bündel von Kupferleitungsadernpaaren, das für die Übertragung von Fernsprechinformationen bestimmt ist und von denen jeweils ein Leitungsadernpaar der Verbindung mit einem bestimmten Teilnehmeranschluß dient.

Zwischen der Vermittlungsstelle VSt und dem Kabelverzweiger KVZ verläuft ferner ein Übertragungssystem ÜH für Signale höherer Übertragungsbitrate, beispielsweise ein Lichtleiterkabel, auf dem 2,048 MBit/s-Informationen übertragen werden.

Die Zusammenführung der beiden Informationsarten erfordern in der Leitungsanschlußeinheit LT, die hier Bestandteil des Kabelverzweigers KVZ ist. Von dort aus verlaufen zur teilnehmerindividuellen Netzabschlußeinheit NT zwei Paare von Leitungsadern, auf denen beide Arten von Informationen übertragen werden.

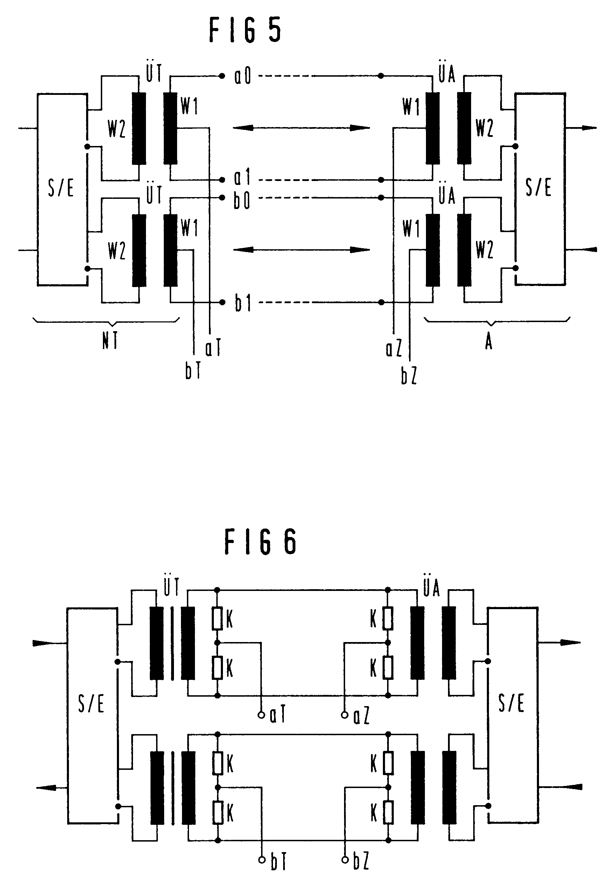

Das Zusammenführen bzw. Trennen der beiden Arten von Informationen in den Einheiten NT und LT für die Anwendungsfälle nach den Figuren 3 oder 4 wird nunmehr anhand der Figuren 5 und 6 näher erläutert, wobei in beiden Fällen die Anwendung des HDSL-Verfahrens vorausgesetzt ist.

Gemäß Figur 5 sind als Bestandteil einer Netzabschlußeinheit NT und einer Leitungsanschlußeinheit LT, zwischen denen zwei Leitungsadernpaare mit den Adern a0, a1 und b0, b1 verlaufen, jeweils ein Übertrager ÜT bzw. ÜA angeordnet, die die Leitungsadernpaare abschliessen. Die mit diesen Leitungsadernpaaren verbundenen ersten Wicklungen weisen jeweils eine Mittelanzapfung auf, an die im Falle des Übertragers ÜT der Netzabschlußeinheit NT die a-Ader bzw. die b-Ader der Teilnehmerendgerätezuleitung und im Falle des Übertragers ÜA der Leitungsanschlußeinheit LT die a-Ader bzw. die b-Ader der mit der Vermittlungsstelle verbindenden Teilnehmeranschlußleitung angeschlossen ist, die, wie anhand der Figuren 3 und 4 erläutert, Bestandteil des zwischen dem Kabelverzweiger KVZ und der abgesetzten digitalen Leitungseinheit DLU mit der Leitungsanschlußeinheit LT bzw. zwischen dem Kabelverzweiger KVZ und der Vermittlungsstelle VSt verlaufenden Leitungsbündels ist.

Es ist also ein Phantomkreis gebildet, bei dem die Adern a0 und a1 bzw. b0 und b1 jeweils gemeinsam neben ihrer Eigenschaft als Bestandteil einer Übertragungsleitung für 2 MBit/sec-Signale Bestandteil der a-Adernverbindung bzw. b-Adernverbindung zwischen Teilnehmeranschluß und Vermittlungsstelle darstellen, über die der konventionelle Fernsprechverkehr abgewickelt wird oder die Bestandteil eines ISDN-Basisanschlusses ist. Im letztgenannten Fall wäre bei den Anordnungen gemäß Figur 3 und 4 zu den Netzabschlußeinheiten NT zum ISDN-Basisanschluß gehörende Netzabschlußeinheiten funktionell in Reihe geschaltet zu denken.

Durch den beschriebenen Anschluß der Teilnehmerendgerätezuleitung bzw. der Teilnehmeranschlußleitung an Mittelanzapfungen der Übertrager ist eine symmetrische Ein- und Auskopplung der auf diesen Leitungen auftretenden Ströme gewährleistet und damit die Beeinträchtigung der 2MBit/sec-Signale durch diese Ströme schon weitgehend vermieden.

Bei der Ausführungsform gemäß Figur 6 ist den mit den Adern der Leitungsadernpaare verbundenen Wicklungen der Übertrager ÜT und ÜA jeweils die Reihenschaltung gleichgroßer Koppelglieder K parallel geschaltet, an deren Verbindungspunkt die a-Adern bzw. b-Adern der Teilnehmerendgerätezuleitung bzw. der mit der Vermittlungsstelle verbindenden Teilnehmeranschlußleitung angeschlossen sind. Zur weiteren Vermeidung gegenseitiger Störungen ist es erforderlich, daß die Adern a0 und a1 bzw. b0 und b1 der Leitungsadernpaare jeweils miteinander und in dieser Form auch von Leitungsadernpaar zu Leitungsadernpaar verdrallt sind. Diese Art von Verdrallung ist bei Leitungsadernpaaren bisher schon verlegter Leitungen, die noch nicht als Bestandteil eines Phantomkreises und demnach noch nicht für die Übertragung von 2 MBit/sec-Informationen ausgenutzt waren, schon gegeben, so daß solche Leitungen ohne weiteres in der erfindungsgemäßen Weise betrieben werden können.

Unter Umständen können zur Verbesserung der Störvermeidung auch noch einfache Filter vorgesehen sein, die verhindern, daß durch Schaltvorgänge im Bereich der a-/b-Adern des Teilnehmerendgeräts höherfrequente Anteile auftreten, die bei nicht vollkommener Symmetrie die 2 MBit/sec-Signale stören könnten.

## Patentansprüche

1. Fernmeldeanschlußnetz zur Übertragung von Fernmeldeinformationen zwischen teilnehmernahen Leitungsanschlußeinheiten(LT), die mit der Fernmeldevermittlungsstelle neben einem Kupferleitungsbündel über ein Breitbandkabel, vorzugsweise Lichtleiterkabel verbunden sind, und teilnehmerindividuellen Netzabschlußeinheiten (NT) mit jeweils zwei teilnehmerindividuellen Kupferleitungsaderpaaren (a0,a1;bo,b1) zwischen Leitungsanschlußeinheit und teilnehmerindividuellem Netzabschluß (NT) zur Übertragung digitaler Informationen, deren Bitrate über der Bitrate von von Fernsprechinformationen liegt, gemäß einer durch Normung für solche hohen Bitraten festgelegten Übertragungstechnik und unter Einhaltung einer ausreichend geringen Leitungslänge sowie mit Ausnutzung der Adern a0,a1;b0,b1) der jeweils zwei teilnehmerindividuellen Kupferleitungsadernpaare zur Bildung eines Phantomkreises, in den teilnehmerseitig die a-Ader und b-Ader (aZ,bZ) der Teilnehmerendgerätezuleitung und auf der Seite eines Leitungsanschlußeinheit die a-Ader und die b-Ader (aT,bT) einer mit der Fernsprechvermittlungsstelle verbindenden Teilnehmeranschlußleitung mündet, wozu die auf den genannten a-Adern und b-Adern (aZ.bZ;aT,bT) auftretenden Ströme symmetrisch auf die Adern (a0,a1;b0,b1) der beiden Kupferleitungsadernpaare eingekoppelt werden und wozu die Adern (a0,b0;a1,b1) der beiden Kupferleitungsadernpaare jeweils untereinander wie auch von Leitungsadernpaar zu Leitungsadernpaar möglichst eng verkoppelt sind.

2. Fernsprechanschlußnetz nach Anspruch 1, **dadurch gekennzeichnet,** daß die Einkopplung der auf den a-Adern und b-Adern (az,bZ;aT,bT) der Teilnehmerendgerätezuleitung und der Teilnehmeranschlußleitung auftretenden Ströme auf die Adern (a0,a1;b0,b1) der beiden Leitungsadernpaare durch Verwendung eines teilnehmerseitigen und eines auf der Seite des Anschlußverzweigers liegenden Übertragers (ÜT,ÜA) erfolgt, an deren erste Wicklung (w1) die Adern (a0,a1;b0,b1) der Leitungsadernpaare angeschlossen sind und die eine Mittelanzapfung aufweisen, an die jeweils eine der genannten a-Adern (az,aT) oder b-Adern (bZ,bT) angeschlossen ist und deren jeweils zweite Wicklung (w2) an Sende- bzw. Empfangseinrichtungen (S/E) für die Informationen höherer Bitrate angeschlossen sind.

3. Fernsprechanschlußnetz nach Anspruch 1, **dadurch gekennzeichnet,** daß zur Entkopplung der auf den a-Adern und b-Adern der Teilnehmerendgerätezuleitung (aZ,bZ)und der Teilnehmeranschlußleitung (aT,bT) auftretenden Ströme auf die Adern (a0,a1;b0,b1) jeweils zweier Leitungsadernpaare teilnehmerseitig die a-Ader und b-Ader (aZ,bZ) der Teilnehmerendgerätezuleitung und auf der Seite des Anschlußverzweigers (A) die a-Ader und b-Ader (aT,bT) der Teilnehmeranschlußleitung jeweils über zwei identische Koppelglieder (K,K) mit den Adern eines der Leitungsadernpaare verbunden sind.

4. Fernmeldeanschlußnetz nach einem der Ansprüche 1 bis 3, **dadurch gekennzeichnet,** daß zur Erzielung der möglichst engen Verkopplung die Adern (a0,b0;a1,b1) der Leitungsadernpaare miteinander verdrallt sind und in dieser Form die beiden Leitungsadernpaare miteinander verdrallt sind.
